# EUROPEAN PATENT APPLICATION

(11) **EP 1 202 153 A2**
(43) Date of publication of application: **02.05.2002**
(21) Application number: 01123877.1
(22) Date of filing: 05.10.2001
(51) Int. Cl.: G06F 1/18

(54) **Frame structure for industrial computers**

(30) Priority: 25.10.2000 IT MI002311
(71) Applicant: Automata S.p.A., 20121 Milan (IT)
(72) Inventor: Mentrasti, Roberto, 21047 Saronno, (VA) (IT); Bernini, Davide, 20080 Albairate, (MI) (IT)
(74) Representative: Coloberti, Luigi

(57) **Abstract**

A frame structure for industrial computers; the structure comprises a fixed box-shaped frame member (11), open frontally, to support a central control unit, and a movable box-shaped frame member (12) for housing modular peripheral units (23, 24, 25) and a display screen (26); guide means (30, 32) are provided to allow the movable frame member (12) to slide with respect to the fixed frame member (11), between a first retracted position in which the movable frame member (12) penetrates tightly into the fixed box-shaped frame member (11), a second advanced position in which allows the access to the peripheral units by an operator, and a third intermediate position in which the peripheral units (22, 23, 24) are made accessible from at least one side of the movable frame member (12) for insertion and removal of multimedia magnetic supports.

## Description

### BACKGROUND OF THE INVENTION

This invention refers to improvements to frames for supporting industrial computers and in particular is directed to a telescopic frame structure for supporting the central control unit and modular peripheral units, according to claim 1.

More precisely, this invention relates to a frame structure for industrial computers suitable for being applied to machine tools, or for computers designed to operate in particularly harsh work environments, for example due to the presence of dust or highly atomised fluids, or whenever the computer may be subject to impact and/or strong acceleration which could damage or negatively affect its functioning capacity, and call for control and repair.

### STATE OF THE ART

For many years widespread use has been made of computers for automatically controlling and monitoring operating cycles of industrial machinery and systems due to their reliability and versatility.

In general, a computer comprises a central control unit and a plurality of peripheral units, for example, reading units for multimedia magnetic supports, such as floppy disks and CD-ROMs, as well as various electronic control circuits.

It is also a well-known fact that the computers applied to machine tools, or designed to operate under harsh environmental conditions, must be appropriately protected against impact, vibration as well as against atmospheric agents liable to jeopardise the operation of the computer itself, such as external sources of heat, humidity of the air, harmful dust or fluid dispersed in the working environment.

A first solution, which is widely used in the field of machine tools, consists of fitting the computer in a control pulpit or console on the front or on one accessible side of the machine, which can be suitably oriented to facilitate its use by an operator.

However, while on the one hand this typical solution is extremely advantageous in that it offers the operator easy access both for the use of the computer and for checks and repairs, on the other it does not provide a high degree of protection in that the various apertures for accessing to the peripheral units inside the computer, are usually protected by simple doors and/or sliding carriages. Moreover, whenever it is necessary to carry out operations on the central control unit or on the peripheral units, the casing containing the computer must be removed or opened completely.

Another solution consists in placing the computer in more greatly protected areas of the machine, for example, in the rear part or in a specially dedicated cabinet.

However, this second solution also has considerable limitations and drawbacks in that it does not completely solve the dual problem of protection and easy access to the computer, and from certain points of view worsens the situation.

### OBJECTS OF THE INVENTION

The main object of this invention is to provide a new frame structure for supporting the various electronic units of an industrial computer, in place of the solutions currently used, whereby it is possible to achieve sufficient protection of the computer, while at the same time maintaining easy access both for use of the computer itself, and for internal operations by an operator.

More in particular, an object of this invention is to provide a frame structure for computers, as referred to above which, in addition to offering adequate protection, also offers differentiated degrees of access to permit access to the reading units and to prevent personnel from operating on the internal units, unless specifically authorised.

A still further object of the invention is to provide an industrial computer provided with a mechanical structure for supporting and housing the various components, which is wholly innovative compared to a conventional computer, capable of affording access to the peripheral reading units for reading the multimedia magnetic supports, while maintaining a high degree of safety and protection.

### BRIEF DESCRIPTION OF THE INVENTION

The above can be achieved by means of a frame structure for housing and supporting the internal components of an industrial computer, in which the computer comprises a central control unit and a plurality of peripheral units, characterised by comprising:
a fixed frame member, said fixed frame member having an open-end box-shaped portion and housing space for the central control unit of the computer;
a movable frame member for supporting peripheral units and a display screen, the movable frame member being in the form of a box-shaped case having dimensions lower than the fixed frame member, for fitting into the housing space of the same fixed frame member;
guiding means for supporting the movable frame member with respect to the fixed frame member;
and in that the movable frame member is movable, with respect to the fixed frame member, between a retracted and closing position in which the movable frame member penetrates into the fixed frame member, an advanced position in which the peripheral units of the movable frame are accessible for repairs by an operator, and an intermediate position in which the peripheral units are made accessible to an operator for the insertion and removal of multimedia magnetic supports.

According to another feature of the invention, the modular peripheral units are disposed on the movable frame member in such a way as to enable a lateral insertion and removal of the multimedia magnetic supports, for example from one or from both lateral sides and/or from the top of the frame.

Suitable stopping or locking means are provided to hold the movable frame member in each of the three operative positions, preventing it from opening completely, except by means of a special key.

### BRIEF DESCRIPTION OF THE DRAWINGS

These and further features of a frame structure for supporting arid housing electronic units of an industrial computer according to this invention, as well as a preferential embodiment, will be more clearly evident from the following description with reference to the accompanying drawings, in which:
Fig. 1 shows a perspective view of a computer in the closed condition;
Fig. 2 shows a side view of the computer in the closed condition;
Fig. 3 shows a longitudinal cross-sectional view of the computer in the condition of fig. 2;
Fig. 4 shows a perspective view of the computer with the movable front frame member in the intermediate position;
Fig. 5 shows a side view of the computer in the condition of figure 4;
Fig. 6 shows a perspective view of the computer in the fully open condition;
Fig. 7 shows a side view of the computer in the condition of figure 6;
Fig. 8 shows an enlarged detail of figure 6.

### DETAILED DESCRIPTION OF THE INVENTION

As can be seen in the various figures, in particular in figures from 1 to 5, the computer indicated as a whole by reference number 10, comprises a metal frame structure for supporting and housing the various electronic units, in particular for housing a central control unit and modular peripheral units such as the hard disk, the reading units for reading multimedia magnetic supports, such as a drive for compact disks, a drive for floppy disks, a data display screen and all the electronic monitoring circuits.

More precisely, the structure of the frame comprises a first fixed frame member 11, on the rear side, defining an open-end box-shaped compartment, and a second box-shaped movable frame member 12 on the front side, for supporting and housing the various peripheral operating units of the computer.

In particular, the rear frame member 11 defines a large compartment open both frontally to allow the introduction of the movable frame member 12, and rearwardly, towards a basket 14 for housing the cards of the central control unit, which can be tilted down and is removably secured to the rear frame 11, as explained further on.

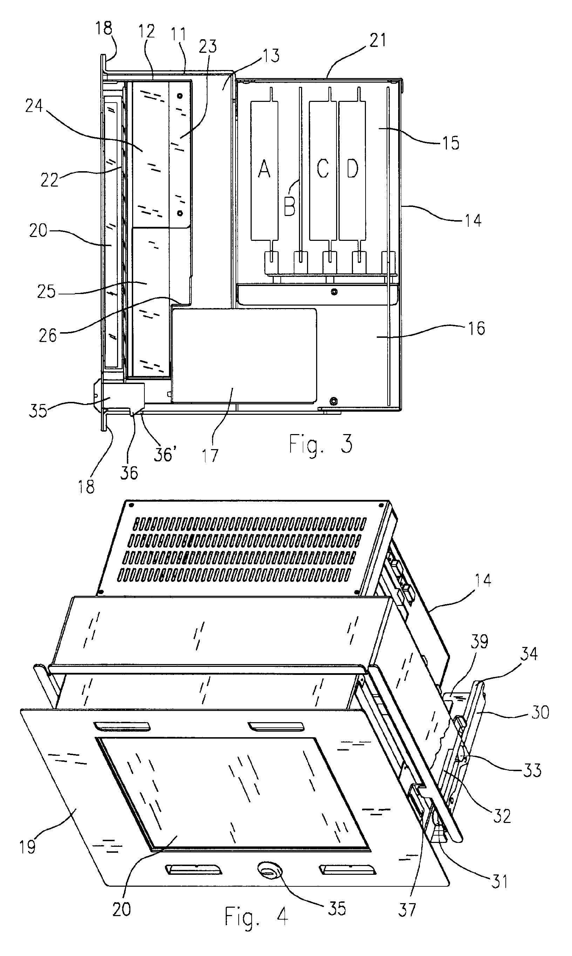

The basket 14 is divided into an upper compartment 15 to contain cards relating to the central control unit of the computer, and a lower compartment 16 for housing a peripheral unit supported by the front frame member, for example the power supply unit 17, as shown in the closed condition of the computer in figure 3.

The rear frame member 11 is substantially rectangular in shape and is provided on the peripheral front edges with tabs 18 designed to come into contact with the protruding peripheral edge of a protective panel 19 for the display screen 20, which frontally closes the movable frame member 12.

The basket 14 containing the cards of the central control unit, generically indicated by reference A, B, C and D, is closed from above by a grille-type cover 21 for circulation of cooling air.

The movable front frame member 12 in turn is rectangular in shape and of suitable lower dimensions to penetrate into the compartment 13 of the rear frame member 11, and is delimited by flat walls, which rearwardly extend from the front panel 19, parallel to the peripheral flat walls of the fixed frame member 11.

The movable front frame member 12 also defines a compartment 22 for housing the liquid crystal display screen 20, and modular units such as an hard disk 23, a CD drive 24, a floppy disk drive 25, as well as electronic monitoring circuits; the various modular peripheral units are preferably supported by suitable sliding carriages, to enable them to be removed, and to be accessible from one or both lateral sides of the frame member 12, through appropriate apertures in the peripheral walls, or from the top, for insertion and removal of multimedia magnetic supports.

Likewise, the power supply unit 17 is rearwardly supported overhanging from the front frame member 12, by means of a horizontally sliding carriage, schematically shown by reference number 26.

The airtight seal between the fixed frame member 11 and the movable frame member 12, in the closed condition of the computer, can be achieved in any appropriate way, for example by disposing a rubber sealing strip 27 between the edges of the front panel 19, and the peripheral tabs 18 of the rear frame 11.

The support and telescopic opening and closing movement of the front frame member 12 compared to the rear frame member 11, is achieved by means of suitable sliding guides disposed on both sides, as schematically shown in the figures of the accompanying drawings.

More precisely, the guiding system comprises, on each lateral side of the frames 11 and 12, a first guide 30 secured to the rear frame member 11, provided with a roller 31 on its front end, and a second guide 32 secured to the movable front frame member 11, which slides on the roller 31 and is provided at its rear end with a roller 33 sliding beneath a lateral edge 34 of the fixed guide 30.

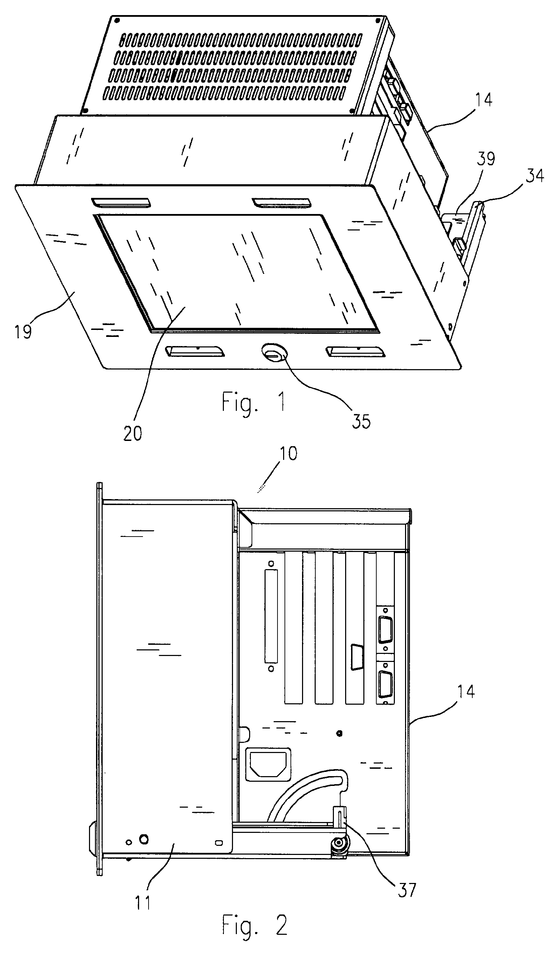

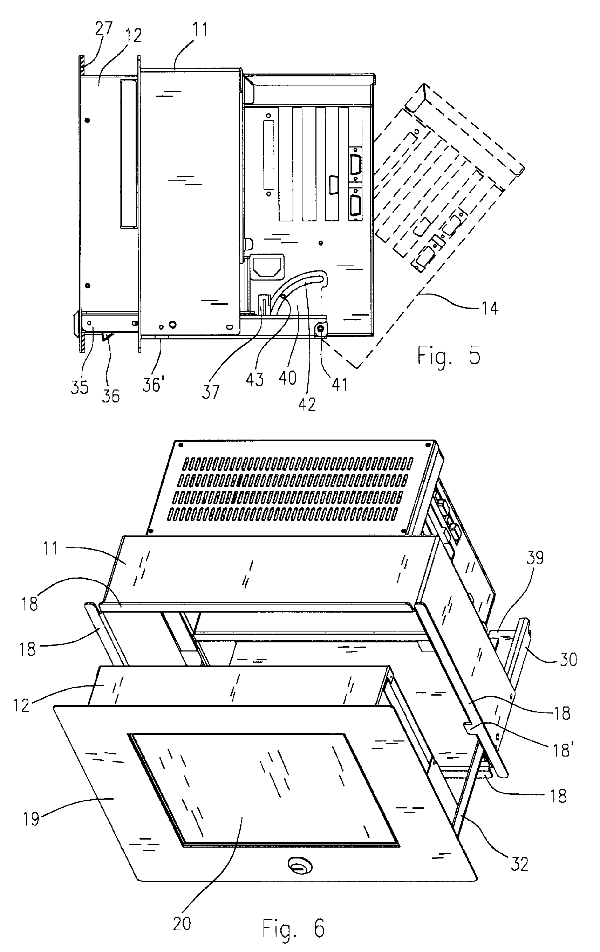

As mentioned previously, the movable front frame member 12 can be made to slide between a closed or completely retracted position, shown in figure 1, in which the front frame 12 completely penetrates into the housing space or compartment 13 of the rear frame member 11, and a completely advanced position, shown in figure 6, in which an operator is allowed access to the peripheral units inside the same movable frame member 12 for possible checks and/or replacements. The movable frame member 12 can also assume an intermediate position, shown in figure 4, in which the frame member 12 partially protrudes from the rear frame member 11, and in which access to the peripheral units is allowed, for insertion and/or removal of the multimedia magnetic supports from the various reading units 24 and 25 referred to previously.

The two-part frame structure, for a computer also comprises suitable locking means for locking and/or stopping the movable frame member 12, with respect to the rear frame member 11, in the three operative positions described above.

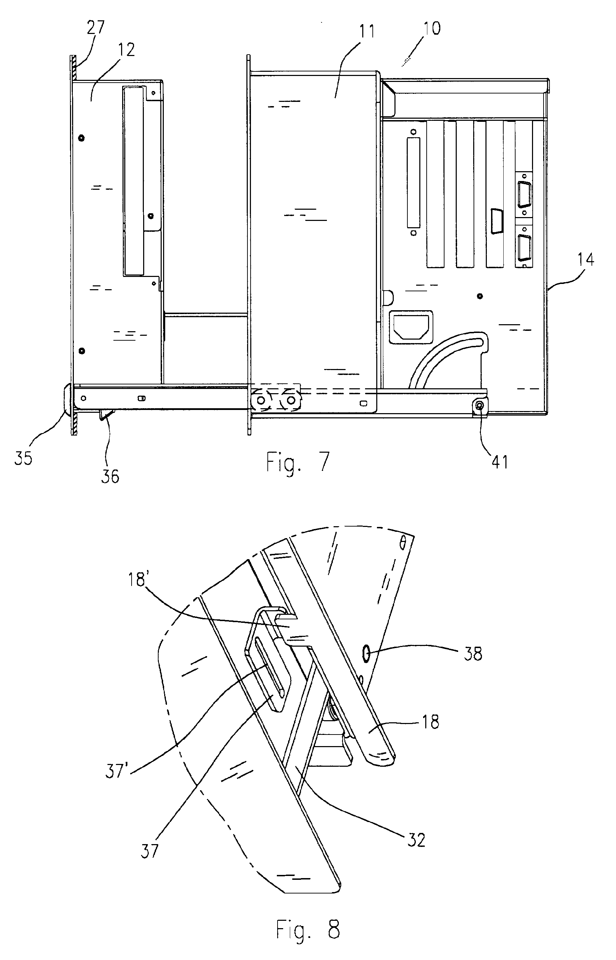

In this connection, the frame member 12, in correspondence with the lower edge of the front panel 19, is provided with a key-operated locking device 35 whose latch 36 can snap into an aperture 36' in the rear wall of the fixed frame member 11. Conversely, the moveable frame member 12 is locked in the intermediate position of figure 4 by means of a L-shaped bracket 37 secured to the guide 32, having a side wing to interfere with a lug 18' which laterally extends towards the inside from a tab 18 on one side of the fixed frame member 11, as shown in the detail of figure 8.

The bracket 37 can be adjustably secured to and removed from the frame member 12, for example by means of two screws (not shown), which pass through a longitudinal slot 37' in the bracket 37, holding it in a locked and unlocked condition, and at the same time acting as a lower and upper stops.

Lastly, the movable frame member 12 is held in the fully open position by means of a screw 38 screwed into the lateral wall of the fixed frame member 11, against which the wheel 33 of the movable guide 32 comes to rest.

Figures 1, 4 and 6 show a perspective views of the three possible positions, respectively, of closed, partial opened and total opened condition of the movable frame member 12 with respect to the fixed frame member 11 of the described frame structure.

Lastly, figure 5 of the accompanying drawings shows a further feature of the frame structure according to this invention.

As mentioned previously, disposed on the rear side of the fixed frame 11 is a basket 14 for containing the central control unit of the computer.

The basket 14 can be removably secured to the frame 11, or in any other appropriate way, to facilitate access by an operator.

In this connection, as shown in fig. 1 and in fig. 5, provided on the inner side of each fixed guide 31 is a tongue 39 shaped with an ear 40 folded upwards, to which is hinged at 41 the basket 14, according to a horizontal axis of rotation. The tongue 39 presents an arch-shaped cavity 42 in which slides a stop pin 43 which protrudes laterally from the basket 14 to guide it as it tilts, as shown by phantom line in fig. 5, and to lock said basket in a horizontal position.

From what has been described and shown in the various figures of the accompanying drawings, it is clear that what is provided is a computer characterised by a new frame structure, comprising a fixed rear frame member 11 and a telescopically sliding front frame member 12 which can be housed in the rear frame, in the closed condition of the computer and which can be partially or totally extended to allow access to the peripheral units of the computer.

It is understood however that what has been described and shown with reference to the accompanying drawings has been given in order to illustrate the features of the invention, and that other modifications may be made without deviating from of the appended claims.

## Claims

1. A frame structure for industrial computers, in which the computer comprises a central control unit and a plurality of peripheral units, **characterised by** comprising:
a fixed frame member (11), said fixed frame member (11) having an open-end box-shaped portion and a housing means (14) for a central control unit of the computer;
a movable frame member (12) for supporting peripheral units (23, 24, 25) and a display screen (20), the movable frame member (12) being in the form of a box-shaped case having dimensions lower than the fixed frame member (11) for fitting into the housing means (14) of the same fixed frame member (11);
guiding means (30, 31; 32, 33) for supporting the movable frame member (12) with respect to the fixed frame member (11);
and in that the movable frame member (12) is movable, with respect to the fixed frame member (11), between a retracted and closing position in which the movable frame member (12) penetrates into the fixed frame member (11), an advanced rearward position in which the peripheral units (23, 24, 25) into the movable frame (12) are accessible for repairs by an operator, and an intermediate position in which the peripheral units (23, 24, 25) are made accessible for the insertion and removal of multimedia magnetic supports.

2. Frame structure according to claim 1, **characterised in that** the fixed frame member (11) comprises a basket (14) on the rear side for housing the central control unit of the computer.

3. Frame structure according to claim 1, **characterised in that** said peripheral units (23, 24, 25) are accessible from at least one side of the movable frame member (12), through apertures for inserting multimedia magnetic supports.

4. Frame structure according to claims 1 and 2, **characterised in that** the movable frame member (12). supports a power supply unit (17), and **in that**, in the retracted position of the movable frame (11), the power supply unit (17) extends through the fixed frame member (11) and into the basket (14).

5. Frame structure according to claim 1, **characterised by** comprising means (18', 37; 35, 36) for holding the moveable frame member (12) in the intermediate and in the retracted positions.

6. Frame structure according to claim 5, **characterised by** comprising a key-operated locking means (35, 36) for locking the movable frame (12) in the retracted position.

7. Frame structure according to claim 5, **characterised by** comprising a removably locking means (18', 37) for locking the movable frame member (12) in the intermediate position.

8. Frame structure according to claim 2, **characterised in that** the basket (14) containing the central control unit of the computer, is tiltably hinged (41) to the fixed frame member (11), and can be dropped down into a horizontal position, and stop means for holding the basket (14) in a tilted position.

9. Frame structure according to claim 2, **characterised in that** the basket (14) comprises a grille-type cover (21).

10. Frame structure according to claim 1, **characterised in that** the movable frame member (12) and the fixed frame member (11) comprise facing side edges air-tightly contacting each other.
